# FASCICULE DE BREVET EUROPEEN

(11) **EP 3 356 479 B1**
(45) Date de publication et mention de la délivrance du brevet: **25.12.2019**
(21) Numéro de dépôt: 16770768.6
(22) Date de dépôt: 26.09.2016
(51) Int. Cl.: C09D 11/101, C09D 11/30, B41M 5/00

(54) **COMPOSITION DE VERNIS A FAIBLE MIGRATION POUR SUBSTRAT IMPRIME PAR JET D'ENCRE**
MIGRATIONSARME LACKZUSAMMENSETZUNG FÜR MIT INK-JET-VERFAHREN BEDRUCKTES SUBSTRAT
VARNISH COMPOSITION WITH LOW MIGRATION FOR INKJET-PRINTED SUBSTRATE

(30) Priorité: 28.09.2015 EP 15290245
(43) Date de publication de la demande: 08.08.2018
(73) Titulaire: MGI Digital Technology, 94260 Fresnes (FR)
(72) Inventeur: ABERGEL, Edmond, 75012 Paris (FR); BERNY, Hadrien, 94600 Choisy-le-roi (FR)
(74) Mandataire: King, Alex
(86) Numéro de dépôt international: PCT/EP2016/072811
(87) Numéro de publication internationale: WO 2017/055203

(56) Documents cités:
- EP-A1- 2 703 457
- WO-A1-2014/126720
- US-A1- 2008 018 725
- US-A1- 2008 225 099

## Description

La présente invention se rapporte au domaine des couches de revêtement et/ou de protection pour substrats, de préférence pour substrats imprimés, et plus particulièrement au domaine de vernis durcissable déposé par jet d'encre qui ne nécessite pas un chauffage important lors de son dépôt grâce à sa caractéristique de viscosité. Plus particulièrement, la présente invention se rapporte au domaine de vernis durcissable déposé par jet d'encre pour le revêtement de matériaux d'emballage de produits qui, quand il est durci, provoque une contamination minimale des produits emballés, par exemple de produits cosmétiques et/ou de denrées alimentaires.

Au cours d'une impression, une encre est déposée sur la surface d'un substrat, ce substrat pouvant être, par exemple, du papier, du carton plat, du carton ondulé ou micro-ondulé ou du plastique. Il est alors courant de recouvrir la surface imprimée de ce substrat par une couche de protection. Cette couche de protection complète la fixation de l'image imprimée sur le substrat tout en garantissant la résistance de l'impression contre certaines agressions extérieures comme par exemple des projections, des frottements, voire la lumière, la chaleur ou l'humidité. Le dépôt de cette couche de protection sur le substrat imprimé est effectué, par exemple, en faisant intervenir un système d'impression par jet d'encre pour favoriser la sélectivité des zones de dépôt. Le vernis permet aussi de personnaliser le document en faisant apparaître des zones avec des motifs en vernis et d'autres zones sans vernis et ceci que le substrat ait été préalablement imprimé ou non.

La demande actuelle concerne plus particulièrement des vernis à faibles viscosités car les nouvelles têtes d'impression demandent l'utilisation de produits à faibles viscosités. Cependant, la diminution des viscosités des vernis nécessaire à l'utilisation des têtes d'impression utilisant les dernières technologies pose un problème de séchage et/ou de polymérisation du vernis après impression. En effet, moins le vernis est visqueux, plus le séchage ou la polymérisation du vernis prend du temps et plus les cadences d'impression sont diminuées si l'on réduit la vitesse de transfert des substrats imprimés dans le four ultraviolet pour permettre une polymérisation suffisante. De plus, le séchage ou polymérisation par ultraviolet présentent parfois l'inconvénient de chauffer le substrat imprimé, ce qui peut être préjudiciable. Par ailleurs, avec les nouvelles têtes à jet d'encre acceptant des viscosités plus faibles, si on veut utiliser des vernis de viscosité élevée, non adaptée à la viscosité nécessaire pour ces nouvelles têtes, on doit augmenter la température pour diminuer la viscosité. Outre une consommation d'énergie préjudiciable, ces températures élevées influencent la durée de vie des têtes d'impression ou nécessitent l'utilisation de matériaux spécifiques rendant les têtes plus onéreuses.

La présente invention se rapporte également au domaine de vernis durcissable déposé par jet d'encre pour le revêtement de matériaux d'emballage de denrées alimentaires qui, quand il est durci, ne provoque pas de contamination des denrées alimentaires. En effet, lorsque ces vernis durcissables sont appliqués (sans contact) sur la surface de l'emballage primaire ou secondaire destiné à des denrées alimentaires, il faut s'assurer que le vernis réponde à des critères de faible migration afin d'éviter toute contamination de la denrée alimentaire. Des normes/directives correspondantes ont déjà été énoncées et continueront d'évoluer de manière à prévenir que des constituants de vernis ne représentent un danger pour la santé humaine, et/ou n'entraînent une modification inacceptable de la composition de la nourriture, et/ou ne génèrent une détérioration des propriétés organoleptiques et/ou une détérioration des propriétés des emballages primaires et/ou secondaires et/ou tertiaires.

La demande de brevet WO2014/126720 revendique une encre à faible migration UV-durcissable dont la composition comprend au moins un photo-initiateur caractérisé en ce que sa teneur en photo-initiateur ayant un poids moléculaire inférieur à 500 g/mol soit d'au moins 40% en poids du total du dit photo-initiateur. Aucune des formulations d'encre selon cette invention n'utilise de monomère monofonctionnel car WO2014/126720 indique qu'il faut les éviter afin d'empêcher que les monomères monofonctionnels n'ayant pas réagi ne migrent dans les denrées alimentaires.

La présente invention a pour objectif de palier un ou plusieurs inconvénients de l'art antérieur en fournissant une encre de couverture adaptée non seulement aux exigences de faible migration du domaine de l'emballage (par exemple l'emballage dans le domaine de la santé et/ou de l'esthétique, par exemple l'industrie pharmaceutique et/ou cosmétique, et, plus particulièrement, le domaine de l'emballage de l'industrie alimentaire) mais également pour limiter les risques d'altération des têtes d'impression, fonctionnant dans des intervalles de température qui n'imposent pas un chauffage important du vernis lors de son dépôt sur le substrat imprimé et/ou adapté pour des têtes d'impression nécessitant des produits de faibles viscosités et/ou adapté à un séchage et/ou une polymérisation rapide permettant ainsi de maintenir des cadences d'impression élevées et/ou évitant de chauffer les substrats. En particulier, un objectif additionnel du vernis selon la présente invention consiste en ce qu'il puisse être imprimé sur le substrat, de préférence par la technologie jet d'encre, avec des épaisseurs de dépôts supérieures à 3 microns, 5 microns, 10 microns, 50 microns et/ou 100 microns voir même des épaisseurs pouvant atteindre les 300 microns tout en conservant ses propriétés de faible migration.

Un objectif additionnel du vernis selon la présente invention consiste en ce qu'il soit reconnu en tant que catégorie GHS07 et répondant ainsi aux exigences du « Globally Harmonized System of Classification et Labeling of Chemicals » (Système Global Harmonisé de classification et d'étiquetage des produits chimiques).

Un objectif additionnel du vernis selon la présente invention lorsque ce vernis est utilisé en tant que vernis de recouvrement de substrat consiste dans sa propriété exceptionnelle de résistance au jaunissement. La Demanderesse a en effet développé une composition particulière de vernis à faible migration qui ne jaunit pas ce qui représente un avantage considérable en comparaison des encres à faible migration déjà décrites dans la littérature.

Ces objectifs sont atteints grâce à un vernis pour recouvrir la surface d'un substrat et déposé par jet d'encre dont la composition du vernis comprend au moins :
i. un monomère durcissable acrylate monofonctionnel,
ii. un monomère durcissable diacrylate difonctionnel,
iii. un monomère durcissable acrylate de seule fonctionnalité acrylate et dont la dite fonctionnalité est comprise entre 3 et 6,
iv. un photo-initiateur,
v. une nanoparticule optionnelle, et
vi. une résine auto-amorçante optionnelle,
   caractérisé en ce que
   - le vernis comprend au moins 5 % en poids de monomère durcissable acrylate monofonctionnel comprenant au moins deux éthoxylations et/ou propoxylations,
   - le vernis comprend au moins 20 % en poids de monomère durcissable diacrylate difonctionnel,
   - le vernis comprend au moins 5 % en poids de monomère durcissable acrylate de seule fonctionnalité acrylate et dont la dite fonctionnalité est comprise entre 3 et 6, le dit monomère comprenant au moins deux éthoxylations et/ou propoxylations,
   - le photo-initiateur comprend au moins 50% en poids de photo-initiateur ayant une masse molaire supérieure à 400 g/mol,
   - les monomères acrylates et les photo-initiateurs représentent au moins 45 % en poids du vernis, et
   - le vernis présente une viscosité inférieure à 200 mPa.s à 25°C et une tension de surface comprise entre 10 mN/m et 50 mN/m à 25°C.

La présente invention concerne également l'utilisation du vernis de la présente invention en tant que vernis dans une technologie d'impression par jet d'encre comprenant une étape de séchage et/ou de polymérisation du dit vernis, caractérisé en ce que la température à laquelle le vernis est soumis lors de son passage dans les têtes d'impression est comprise entre 25 et 80°C, de préférence entre 35°C et 50°C et/ou en ce que le séchage et/ou polymérisation du dit vernis est réalisé dans des plages de vitesse de déplacement du substrat allant de 0,05 à 10 m/s, de préférence de 0,05 à 2 m/s.

Dans certains modes de réalisation de la présente invention, l'étape de séchage et/ou de polymérisation du dit vernis comprend une exposition du vernis à un rayonnement ultraviolet, par exemple à un rayonnement UV par lampe UV conventionnelle, ou à un rayonnement UV par diode électroluminescente (LED), de préférence à un rayonnement UV par combinaison d'une diode électroluminescente (LED) et d'une lampe UV conventionnelle.

La présente invention concerne également l'utilisation du vernis de la présente invention - lorsque la composition du dit vernis comprend au moins un pigment et/ou un colorant tel que défini ci-après - directement en tant qu'encre. Cette nouvelle utilisation est particulièrement intéressante industriellement car elle permet au travers de l'impression par jet d'encre d'une seule composition selon la présente invention de combiner les propriétés d'encre et de vernis et de répondre ainsi de manière avantageuse aux exigences de l'utilisation recherchée. Toutefois, comme indiqué ci-après dans la description, la présente invention privilégie l'utilisation du vernis comme vernis transparent, à savoir un vernis dont la composition ne comprend pas d'agent colorant. Ce vernis transparent selon la présente invention est caractérisé par une résistance supérieure au jaunissement.

L'invention, avec ses caractéristiques et avantages, ressortira plus clairement à la lecture de la description faite en référence au dessin annexé dans lequel :

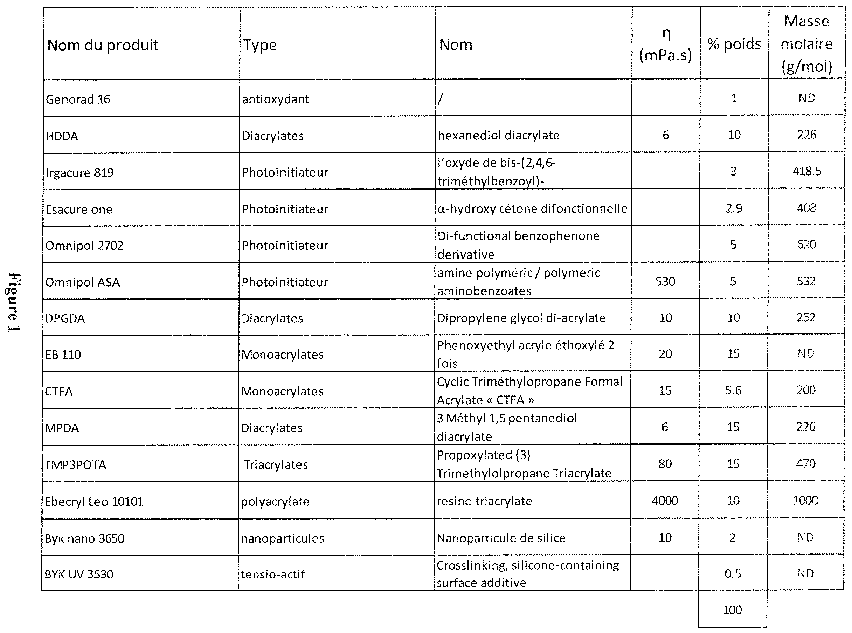

- la figure 1 représente un tableau établissant la composition du vernis selon l'invention.

Il convient de signaler que les molécules citées dans le présent document ne sont pas limitatives de la composition du vernis de l'invention, mais sont illustratives de molécules, monomères ou polymères qui possèdent ou présentent des caractéristiques, des propriétés ou des fonctions identiques ou similaires.

La présente invention porte sur un vernis de protection à faible migration destiné à recouvrir une partie ou toute la surface d'un substrat, ledit substrat pouvant par exemple et de façon non limitative être vierge ou préalablement imprimé. Ce vernis peut être réalisé avec ou sans solvant ; ce vernis est donc réalisé à titre illustratif avec ou sans eau et/ou avec ou sans solvant organique (tel que, par exemple, le méthyle isobutyle cétone, le méthyle éthyle cétone, le diméthyle cétone, l'alcool isopropylique, l'alcool isobutylique, l'alcool n-butylique, l'acétate d'éthyle, l'acétate de n-butyle, l'éthyle cellosolve, le butyle cellosolve et d'autres solvants similaires).

Le vernis selon la présente invention comprend donc dans sa composition au moins
i. un monomère durcissable acrylate monofonctionnel,
ii. un monomère durcissable diacrylate difonctionnel, et
iii. un monomère durcissable acrylate de seule fonctionnalité acrylate et dont la dite fonctionnalité est comprise entre 3 et 6.

Le vernis selon la présente invention comprend donc dans sa composition au moins 5 % en poids de monomère durcissable acrylate monofonctionnel comprenant au moins deux éthoxylations et/ou propoxylations, de préférence au moins 7,5 % en poids, par exemple au moins 10 % en poids. Dans certains modes de réalisation de la présente invention, la concentration dans le vernis en monomère durcissable acrylate monofonctionnel ne comprenant pas au moins deux éthoxylations et/ou propoxylations sera inférieure à 10 % en poids, de préférence inférieure à 1 % en poids, par exemple inférieure à 0,1 % en poids.

Parmi les monomères durcissables acrylate monofonctionnel du vernis, on citera à titre d'exemple les monoacrylates et/ou les composés dérivés des dits monoacrylates, pris isolément ou en mélange de deux ou plusieurs des dits composés. A titre illustratif, on citera les alkyles monoacrylates aliphatiques et/ou leurs dérivés, en particulier les alkyles monoacrylates aliphatiques ayant plus de cinq atomes de carbone et/ou leurs dérivés. A titre illustratif, on citera également les alkyles monoacrylates aromatiques et/ou leurs dérivés, en particulier les alkyles monoacrylates aromatiques ayant plus de cinq atomes de carbone et/ou leurs dérivés. On citera à titre d'exemple non limitatif le 2-(2-éthoxyéthoxy) éthyle acrylate « EOEOEA », le phénol éthoxylé monoacrylate, le Cyclic Triméthylopropane Formal Acrylate « CTFA », l'octyle-décyl-acrylate « ODA » (qui a également pour propriété de restreindre les tensions de surface dans le vernis), le tridécyl acrylate « TDA », l'octyle acrylate, l'isodécyl acrylate « IDA », le 3,3,5 triméthyl cyclohexyl acrylate, l'iso octyl acrylate « IOA », l'isobornyl acrylate « IBA », le 3,3,5 triméthyl cyclohexanol acrylate « TMCHA », le tétrahydrofurfuryl acrylate « THFA », et/ou un mélange de deux ou plusieurs des dits composés précités.

Le vernis selon la présente invention comprend donc dans sa composition au moins 20 % en poids de monomère durcissable diacrylate difonctionnel, de préférence au moins 25 % en poids, par exemple au moins 30 % en poids. Les monomères durcissables diacrylate difonctionnel peuvent avantageusement comprendre au moins deux éthoxylations et/ou propoxylations. Dans un mode de réalisation particulier de la présente invention, les monomères durcissables diacrylate difonctionnel consistent en un mélange de diacrylates comprenant au moins deux éthoxylations et/ou propoxylations avec des diacrylates n'en comprenant pas ; avec de préférence un rapport en poids entre les deux familles de diacrylates compris entre 1 : 10 et 10 : 1, par exemple 1 : 3 et 3 : 1. En effet, la Demanderesse a découvert que l'utilisation unique (parmi la famille de monomère durcissable diacrylate difonctionnel) de certains monomères durcissables diacrylate difonctionnel comprenant au moins deux éthoxylations et/ou propoxylations et/ou l'utilisation à forte concentration (par exemple à plus de 91% en poids parmi la famille de monomère durcissable diacrylate difonctionnel) de certains monomères durcissables diacrylate difonctionnel comprenant au moins deux éthoxylations et/ou propoxylations, pouvait conduire à une toxicité et/ou une instabilité du vernis incompatible avec l'application de faible migration recherchée dans le cadre de la présente invention.

Parmi les monomères durcissables diacrylate difonctionnel pouvant compléter la composition du vernis, on citera à titre d'exemple les diacrylates et/ou les composés dérivés des dits diacrylates, pris isolément ou en mélange de deux ou plusieurs des dits composés. A titre illustratif, on citera les alkyles diacrylates aliphatiques et/ou leurs dérivés, en particulier les alkyles diacrylates aliphatiques ayant plus de cinq atomes de carbone et/ou leurs dérivés. A titre illustratif, on citera également les alkyles diacrylates aromatiques et/ou leurs dérivés, en particulier les alkyles diacrylates aromatiques ayant plus de cinq atomes de carbone et/ou leurs dérivés. On citera à titre d'exemple non limitatif le triéthylène glycol diacrylate (TIEGDA), le tripropylène glycol diacrylate (TPGDA), le dipropylène glycol diacrylate (DPGDA), le polyéthylène glycol diacrylate, le polypropylène glycol diacrylate, le propoxylated neopentylglycol diacrylate, l'hexanediol diacrylate (HDDA), l'esterdiol diacrylate (EDDA), le 3 Méthyl 1,5 pentanediol diacrylate (MPDA), le polybutadiene diacrylate (PBDDA), le decanediol diacrylate (DDDA), le tricyclodecanediméthanol diacrylate (TCDDMDA), le tetraéthylène glycol diacrylate (TTEGDA), et/ou un mélange de deux ou plusieurs des dits composés précités.

Le vernis selon la présente invention comprend donc dans sa composition au moins 5 % en poids de monomères durcissables acrylates de seule fonctionnalité acrylate et dont la dite fonctionnalité est comprise entre 3 et 6 comprenant au moins deux éthoxylations et/ou propoxylations, de préférence au moins 7,5 % en poids, par exemple au moins 10 % en poids. Dans certains modes de réalisation de la présente invention, la concentration dans le vernis en monomères durcissables acrylates de seule fonctionnalité acrylate et dont la dite fonctionnalité est comprise entre 3 et 6 ne comprenant pas au moins deux éthoxylations et/ou propoxylations sera inférieure à 10 % en poids, de préférence inférieure à 1 % en poids, par exemple inférieure à 0,1 % en poids.

Parmi les monomères durcissables acrylates de seule fonctionnalité acrylate et dont la dite fonctionnalité est comprise entre 3 et 6 pouvant compléter la composition du vernis, on citera à titre d'exemple les triacrylates, les tétraacrylates, les pentaacrylates, les hexaacrylates et/ou les composés dérivés des dits acrylates, pris isolément ou en mélange de deux ou plusieurs des dits composés. A titre illustratif, on citera les alkyles acrylates aliphatiques et/ou leurs dérivés, en particulier les alkyles acrylates aliphatiques ayant plus de cinq atomes de carbone et/ou leurs dérivés. A titre illustratif, on citera également les alkyles acrylates aromatiques et/ou leurs dérivés, en particulier les alkyles acrylates aromatiques ayant plus de cinq atomes de carbone et/ou leurs dérivés. On citera à titre d'exemple non limitatif le ethoxylated (3) triméthylolpropane triacrylate (TMP3EOTA), l'ethoxylated (6) trimethylolpropane triacrylate (TMP6EOTA), l'ethoxylated (9) trimethylolpropane triacrylate (TMP9EOTA), l'ethoxylated (15) trimethylolpropane triacrylate (TMP15EOTA), l'ethoxylated (20) triméthylolpropane triacrylate (TMP20EOTA), le propoxylated glycérol triacrylate, le propoxylated (3) triméhylolpropane triacrylate (TMP3POTA), le dipentaerythriol hexa acrylate, le ditrimethylol propane tetra acrylate, le pentaerythritol tetraacrylate (PETTA), le trimethylolpropane triacrylate (TMPTA), le ditrimethylolpropane triacrylate (Di-TMPTTA), le tris (2-hydroxy ethyl) isocyanurate triacrylate THEICTA, le pentaerythritol triacrylate PETIA, le di-pentaerythritol pentaacrylate (DiPEPA), le ethoxylated (4) pentaerythritol tetraacrylate, le ethoxylated 12 glyceryl triacrylate (G12EOTA) et/ou un mélange de deux ou plusieurs des dits composés précités.

La réaction de polymérisation lorsque le vernis est projeté sur la surface du substrat, est initiée par au moins un photo-initiateur. Le photo-initiateur du vernis selon la présente invention comprend donc au moins 50% en poids de photo-initiateur ayant une masse molaire supérieure à 400 g/mol, de préférence au moins 75 % en poids, par exemple au moins 90 % en poids. Dans certains modes de réalisation de la présente invention, le photo-initiateur du vernis selon la présente invention comprend au moins 40% en poids de photo-initiateur ayant une masse molaire supérieure à 500 g/mol, de préférence au moins 60 % en poids, par exemple au moins 70 % en poids. Dans certains modes de réalisation de la présente invention, le photo-initiateur du vernis selon la présente invention comprend moins de 20 % en poids de photo-initiateur ayant une masse molaire inférieure ou égale à 400 g/mol, de préférence moins de 10 % en poids, par exemple moins de 5 % en poids.

Les photo-initiateurs peuvent avantageusement représenter au moins 5 % en poids du vernis, par exemple au moins 7,5 % en poids du vernis, et/ou moins de 25 % en poids du vernis, par exemple moins de 20% en poids du vernis. A titre illustratif de photo-initiateurs pouvant avantageusement être utilisés dans la composition du vernis selon la présente invention, on citera l'oxyde de bis-(2,4,6-triméthylbenzoyl)-phénylphosphine (connu sous le nom Irgacure 819), l'a-hydroxy cétone difonctionnelle (connu sous le nom Esacure one), le di-functional benzophenone derivative (connu sous le nom Omnipol 2702), le polymeric aminobenzoates (connu sous le nom Omnipol ASA), les Benzophenones polymeriques (connu sous les noms Omnipol BP et Genopol BP-2), le piparazino based aminoalkylphenone (connu sous le nom Omnipol 9220), les thioxanthones polymériques (par exemple les Genopol TX-2 et/ou Omnipol TX), et/ou un mélange de deux ou plusieurs des photo-initiateurs précités.

Afin d'obtenir des propriétés supérieures en matière de résistance mécanique, de flexibilité, et/ou anti salissure, la composition du vernis selon la présente invention peut intégrer de manière avantageuse des nanoparticules. Le terme de nanoparticules est de préférence employé lorsqu'au moins une des dimensions de la nanoparticule est inférieure à 300 nm, de préférence inférieure à 100 nm. A titre illustratif de dispersion de nanoparticules pouvant avantageusement être utilisés dans la composition du vernis selon la présente invention, on citera celles à base d'alumine et/ou de silice, par exemple celles de BYK (par exemple les NANOBYK 3601 et/ou 3610 et/ou 3650) ; on citera également les nanoparticules conductrices et/ou semi-conductrices (par exemple à base d'argent et/ou de graphène pour apporter des propriétés de vernis conducteur) ; et/ou un mélange de deux ou plusieurs des composés précités. Les nanoparticules peuvent représenter moins de 10% en poids du vernis, par exemple moins de 5 % en poids, préférentiellement de 0,01 à 3,0% en poids du vernis, par exemple de 0,1 % à 2,5 en poids du vernis. Lorsqu'une nanoparticule telle que définie ci-dessus est utilisée dans une composition de vernis selon la présente invention, elle ne sera comptabilisée que dans la catégorie des nanoparticules même si sa composition et/ou sa fonction pouvait aussi la classer dans une autre catégorie telle que décrite dans la présente description.

Afin d'obtenir un étalement optimal du vernis sur la surface du support, la composition du vernis selon la présente invention peut intégrer de manière avantageuse un agent tensio-actif. Les agents tensio-actifs peuvent être utilisés tels que, par exemple et de façon non limitative, le polyéther siloxane, le polyéther siloxane acrylate, l'alcool alkoxylé, un fluoro-surfactant, ou encore un surfactant « sans silicone ». A titre illustratif d'agents tensio-actifs pouvant avantageusement être utilisés dans la composition du vernis selon la présente invention, on citera ceux d'EVONIK (par exemple ceux de la gamme TEGO), ceux de BYK (par exemple le BYK UV 3530), ceux de CYTEC, de SARTOMER, et/ou de MOMENTIVE (par exemple ceux de la gamme Coatosil, Baysilone et/ou Silquest), et/ou un mélange de deux ou plusieurs des composés précités. L'agent tensio-actif peut représenter moins de 5% en poids du vernis, préférentiellement de 0,01 à 3,0% en poids du vernis, par exemple de 0,1 % à 2,5 en poids du vernis.

Afin d'éviter une prise en masse du vernis sous l'action de la chaleur dans des conditions non-désirées, le vernis selon la présente invention peut intégrer un antioxydant qui joue le rôle d'inhibiteur de radicaux libres. Cette inhibition peut être assurée, par exemple, en intégrant dans la composition un mélange référencé sous le nom de Genorad 16 et/ou d'Additol S110, seuls ou en mélange. L'antioxydant peut représenter moins de 3% en poids du vernis, préférentiellement de 0,1 à 2,0% en poids du vernis, par exemple de l'ordre de 1,0% en poids du vernis. A titre illustratif et non limitatif, nous citerons également les Genorad 16, Genorad 18, Genorad 20, Genorad 21 et Genorad 22 de la societe Rahn, les Omnistab IC, Omnistab IN 515, Omnistab IN 516, Omnistab IN 518, Omnistab IN 520, Omnistab IN 522 et Omnistab IN 526 de la société IGM resins, les additol S110, additol S120 et additol S130 de la société Allnex, seuls et/ou en mélange.

Afin d'améliorer la composition finale du vernis tout en contrôlant sa teneur en photo-initiateurs, le vernis selon la présente invention peut avantageusement intégrer au moins une résine auto-amorçante, seule ou en mélange. Parmi les résines auto-amorçantes, on citera à titre d'exemple une résine auto-amorçante acrylate et/ou une résine auto-amorçante ayant une masse molaire supérieure à 400 g/mol, de préférence supérieure à 750 g/mol. Parmi les résines auto-amorçantes acrylates, on citera par exemple
- celles comprenant au moins deux éthoxylations et/ou propoxylations, et/ou
- celles de seule fonctionnalité acrylate et dont la dite fonctionnalité est comprise entre 3 et 6.

A titre illustratif de résines auto-amorçantes pouvant avantageusement être utilisées dans la composition du vernis selon la présente invention, on citera celles de ALLNEX, par exemple l'Ebecryl LEO 10101 et/ou l'Ebecryl LEO 10102, et/ou un mélange de deux ou plusieurs des composés précités.

Les résines auto-amorçantes peuvent représenter moins de 20 % en poids du vernis, par exemple moins de 15 % en poids, et/ou plus de 2 % en poids, par exemple plus de 5 % en poids du vernis. Lorsqu'une résine auto-amorçante telle que définie ci-dessus est utilisée dans une composition de vernis selon la présente invention, elle ne sera comptabilisée que dans la catégorie des résines auto-amorçantes même si sa composition et/ou sa fonction pouvait aussi la classer dans une autre catégorie telle que décrite dans la présente description.

Le vernis peut intégrer dans sa composition au moins une résine qui n'entre pas dans la définition des acrylates (i), (ii) et (iii) du vernis revendiqué [qui n'est donc ni un monomère durcissable acrylate monofonctionnel, ni un monomère durcissable diacrylate difonctionnel, ni un monomère durcissable acrylate de seule fonctionnalité acrylate et dont la dite fonctionnalité est comprise entre 3 et 6], la dite résine étant de préférence choisie parmi les résines acryliques, vinyliques, cétoniques, polyesters, aldéhydes, époxy, uréthane, et/ou polyéther. Cette résine peut être ajoutée dans la composition dans une proportion de l'ordre de 5 à 20% en poids du mélange final. Le choix de la résine est fonction du support et selon le résultat recherché. Ces résines ont par exemple comme propriétés d'améliorer la résistance chimique de la composition finale et/ou la résistance mécanique du vernis déposé ; elles peuvent également apporter des propriétés de brillance, de vitesse de séchage, et/ou de flexibilité aux vernis, de résistance à l'eau, résistance aux UV, résistance aux acides fort, et/ou aux bases fortes ; apporter une protection contre la corrosion, apporter des propriétés de conductivité, des propriétés d'isolant électrique, des propriétés de lamination, de transfert à chaud, de sublimation, des propriétés de réimpression, adhésive et/ou de non jaunissement.

Selon le type de vernis qu'on souhaite réaliser, des éléments additionnels peuvent être ajoutés aux composants.

Ainsi, pour la conception de vernis mât ou satin, des agents mâtant peuvent être apportés au vernis ; à titre illustratif, nous citerons les agents mâtant ayant une granulométrie inférieure à 50µm, de préférence inférieure à 10µm, pour la conception de vernis mât ou satin. La concentration en poids des agents mâtant dans le vernis est généralement inférieure à 20%.

Pour l'obtention d'un vernis pailleté, des paillettes pourront avantageusement être ajoutées au vernis ; à titre illustratif, nous citerons les paillettes ayant une granulométrie inférieure à 50µm, préférentiellement inférieure à 10µm, pour la conception de vernis pailletés. La concentration en poids des paillettes dans le vernis est généralement inférieure à 20%.

Dans certains modes de réalisation de la présente invention, le vernis pour recouvrir la surface d'un substrat et déposé par jet d'encre est caractérisé en ce que la composition du vernis comprend au moins un agent colorant. Ceci permet de conférer à l'encre une couleur particulière. L'agent colorant peut être choisi parmi les colorants, les pigments ou une combinaison des pigments et/ou colorants. A titre illustratif, nous citerons les pigments et/ou colorants fluorescents pour la conception de vernis fluorescents et les pigments sensibles à la lumière noire pour la conception de vernis à effet optique. Dans certains modes de réalisation de la présente invention, l'agent colorant représente de 0,1 à 35 % en poids du vernis, préférentiellement de l'ordre de 1 à 20 % en poids du vernis. Les concentrations élevées d'agent colorant concernent en général les colorants de couleur blanche.

A titre illustratif, nous citerons les agents colorants ayant une granulométrie inférieure à 50µm, préférentiellement inférieure à 10µm

Des exemples de pigments appropriés comprennent, mais ne sont pas limités à ceux sous le nom de Pigment Bleu (par exemple le Pigment Bleu 1, 15, 15:1, 15 :2, 15:3, 15:4, 15:6, 16, 24 ou 60), Pigment Brun (par exemple le Pigment Brun 5, 23 ou 25), Pigment Jaune (par exemple le Pigment Jaune 3, 14, 16, 17, 24, 65, 73, 74, 83, 95, 97, 108, 109, 110, 113, 120, 128, 129, 138, 139, 150, 154, 156 ou 175), Pigment Vert (par exemple le Pigment Vert 1, 7, 10 ou 36), Pigment Orange (par exemple le Pigment orange 5, 15, 16, 31, 34, 36, 43, 48, 51, 60, 61 ou 71), Pigment Rouge (par exemple le Pigment Rouge 4, 5, 7, 9, 22, 23, 48, 48:2, 49, 112, 122, 123, 149, 166, 168, 170, 177, 179, 190, 202, 206, 207 ou 224), Pigment Violet (par exemple le Pigment Violet 19, 23, 32, 37 ou 42), Pigment Noir (par exemple le Pigment Noir 6 ou 7) - les numérotations de pigments colorés correspondants au « Colour Index, Volumes 1-8, édité par la Société des teinturiers et coloristes, Yorkshire, Angleterre - ; on citera également le Noir PB 2 et 5; le noir de carbone ; le dioxyde de titane (y compris le rutile et l'anatase); le sulfure de zinc ; ou un mélange de deux ou plusieurs des pigments précités.

Lorsqu'un pigment utilisé dans les compositions d'encre de la présente invention, on préférera procéder à la pré-dispersion du dit pigment dans un ou plusieurs des monomères durcissables, avant l'incorporation de ce(s) dernier(s) dans le vernis. On préférera également utiliser des agents de dispersion afin d'améliorer la stabilité de la dispersion des pigments ; en effet, ces agents de dispersion permettent de réduire ou même d'éviter tout phénomène de dépose et/ou d'agglomération des pigments.

La présente invention concerne donc également l'utilisation du vernis de la présente invention - lorsque la composition du dit vernis comprend au moins un pigment et/ou un colorant tel que défini ci-avant - directement en tant qu'encre. Cette nouvelle utilisation est particulièrement intéressante industriellement car elle permet au travers de l'impression par jet d'encre d'une seule composition selon la présente invention de combiner les propriétés d'encre et de vernis et de répondre ainsi de manière avantageuse aux exigences de l'utilisation recherchée.

Les revêtements de vernis transparents ont quant à eux une concentration préférée de 0% en agent colorant. Ces vernis transparents constituent les vernis préférés selon la présente invention car ils sont caractérisés par une résistance supérieure au jaunissement.

Ainsi, dans certains modes de réalisation de la présente invention, le vernis (pour recouvrir la surface d'un substrat et déposé par jet d'encre) a une composition qui comprend au moins :
- un monomère durcissable acrylate monofonctionnel,
- un monomère durcissable diacrylate difonctionnel,
- un monomère durcissable acrylate de seule fonctionnalité acrylate et dont la dite fonctionnalité est comprise entre 3 et 6,
- un photo-initiateur,
- une résine auto-amorçante optionnelle,
- une dispersion de nanoparticule optionnelle, et
- optionnellement
   ∘ un agent tensio-actif, et/ou
   ∘ un antioxydant, et/ou
   ∘ une résine, et/ou
   ∘un agent matant, et/ou
   ∘ des paillettes, et/ou
   ∘ un agent colorant
et dont la somme de ces composants représente de préférence au moins 70% en poids du vernis, de préférence au moins 85% en poids, par exemple au moins 95% en poids, ou même la totalité du vernis de la présente invention.

Dans certains modes de réalisation de la présente invention, le vernis (pour recouvrir la surface d'un substrat et déposé par jet d'encre) a une composition qui comprend au moins :
- un monomère durcissable acrylate monofonctionnel,
- un monomère durcissable diacrylate difonctionnel,
- un monomère durcissable acrylate de seule fonctionnalité acrylate et dont la dite fonctionnalité est comprise entre 3 et 6,
- un photo-initiateur, et
- optionnellement
   ∘ un agent tensio-actif, et/ou
   ∘ un antioxydant, et/ou
   ∘ une résine
et dont la somme de ces composants représente de préférence au moins 70% en poids du vernis, de préférence au moins 85% en poids, par exemple au moins 95% en poids, ou même la totalité du vernis de la présente invention.

Dans certains modes de réalisation de la présente invention, le vernis (pour recouvrir la surface d'un substrat et déposé par jet d'encre) a une composition qui comprend au moins :
- un monomère durcissable acrylate monofonctionnel,
- un monomère durcissable diacrylate difonctionnel,
- un monomère durcissable acrylate de seule fonctionnalité acrylate et dont la dite fonctionnalité est comprise entre 3 et 6,
- un photo-initiateur, et
- optionnellement
   ∘ un agent tensio-actif, et/ou
   ∘ un antioxydant,
et dont la somme de ces composants représente de préférence au moins 70% en poids du vernis, de préférence au moins 85% en poids, par exemple au moins 95% en poids, ou même la totalité du vernis de la présente invention.

Dans le cas particulier où un composant du vernis (de par sa composition et/ou sa fonction) entrerait dans plus d'une catégorie des familles de composants définies selon la présente invention, ces composants seront, à l'exception des résines (qui n'entrent pas dans la définition des acrylates (i), (ii) et (iii) du vernis revendiqué), des nanoparticules et des résines auto-amorçantes,
- comptabilisés dans chacune des dites familles quand on se référera à la dite famille, et
- ne seront comptabilisés qu'une seule fois quand on se réfèrera à la composition globale du vernis.

Dans certains modes de réalisation préférés de la présente invention, les compositions de vernis ne comprendront pas de
- 2-(2-vinyloxyethoxy) ethyl acrylate) « VEEA », et/ou
- d'autre monomère comprenant à la fois un groupement acrylate et un autre groupement polymérisable sélectionné parmi les vinlyéther, allyléther et/ou allylester, et/ou
- de 2-(2-éthoxyéthoxy) éthyle acrylate « EOEOEA » en raison d'une toxicité qui s'est avérée quasi-incomptable avec l'application de faible migration recherchée dans le cadre de la présente invention, et/ou
- de tetrahydrofurfuryl acrylate « THFA » en raison d'une toxicité qui s'est avérée quasi-incomptable avec l'application de faible migration recherchée dans le cadre de la présente invention, et/ou
- de Vinylcaprolactam en raison d'une toxicité qui s'est avérée quasi-incomptable avec l'application de faible migration recherchée dans le cadre de la présente invention, et/ou
- de composés thiols, en particulier de composés organiques comportant un groupement thiol [-SH, groupement sulfhydryle] attaché à un atome de carbone.

Le vernis selon la présente invention est donc caractérisé par une viscosité inférieure à 200 mPa.s à 25°C, par exemple entre 8 et 60 mPa.s.

Le vernis selon la présente invention est donc caractérisé par une tension de surface comprise entre 10 mN/m et 50 mN/m à 25°C, par exemple entre 20 et 25 mN/m.

Dans certains modes de réalisation préférés de la présente invention, le vernis peut donc être imprimé sur un substrat, de préférence par la technologie jet d'encre, avec des épaisseurs de dépôts supérieures à 3 microns, 5 microns, 10 microns, 50 microns et/ou 100 microns voir même des épaisseurs pouvant atteindre les 300 microns tout en conservant ses propriétés de faible migration. Les exigences légales correspondantes sont disponibles sur le site de la « European Printing Ink Association » (« EuPIA », http://www.eupia.org/) ainsi que sur le site de l'Autorité européenne de sécurité des aliments (« EFSA », http://www.efsa.europa.eu/fr/). Toute méthode appropriée de mesure de la migration du vernis et/ou de ses composants pourra être utilisée ; on favorisera les méthodes de mesure décrites dans le Guide EuPIA1 (voir site « EuPIA ») pour les encres d'imprimerie appliquées sur la face non en contact des aliments des emballages de denrées alimentaires. A titre illustratif de test pouvant être utilisé dans le cadre de la présente invention, nous citerons le suivant: des carrés de 10 cm de côté sont imprimés et séchés sur tout type de substrats (PVC, PP, PE, papier couché, ...) à différentes épaisseurs. Ils sont ensuite mis en contact avec un simulant alimentaire (par exemple une solution d'éthanol à 10% volumique, solution d'éthanol à 20% volumique, solution d'acide acétique à 3% massique ou huile végétale) à une température et pendant une durée contrôlées. 15 µL du simulant alimentaire sera dosé par HPLC (chromatographie phase liquide à haute performance) via une colonne en C18 et élué par de l'eau acidifié et de l'acétonitrile afin de déterminer la concentration en chacun des composés du vernis ou de l'encre ayant migré. Afin de déterminer les concentrations des différents constituants, des courbes étalons de solutions de concentrations connues auront préalablement été réalisées. Les quantités alors obtenus seront alors multipliées par 6 afin de correspondre au taux de migration spécifique. Le facteur 6 permet de simuler une boite de 10cm de côté emballant 1 litre d'aliment. Les taux de migration spécifique ainsi obtenus devront être inférieurs aux taux limites spécifiques de migration du composé. Ces taux sont consignés dans l'ordonnance suisse SR817.023.21. L'épaisseur ainsi que le taux de couverture pourront être limités afin de diminuer les valeurs de migration.

Selon un mode opératoire préféré, mais qui n'est pas limitatif de l'invention, la détermination des autres paramètres physiques des composants ou de la composition de la demande est opérée aux températures indiquées et dans des conditions de pressions habituelles à la surface terrestre, préférentiellement de l'ordre d'une atmosphère (1013 mBar). C'est ainsi que la viscosité peut être mesurée à l'aide d'un viscosimètre HAAKE Viscotester 550 équipé d'un Cup NV et d'un Rotor NV qui sont des instruments de mesure connus, commercialisé par la société ThermoFisher, faisant intervenir un système de régulation de température, branché sur un bain thermostaté, maintient l'échantillon de vernis à une température de 25[deg.]C. De même, la tension de surface est mesurée à l'aide d'un tensiomètre DSA 100 avec la méthode de la goutte pendante, commercialisé par la société KRÜSS. Les granulométrie et conductivité sont respectivement mesurées à l'aide d'une part d'un appareil de mesure de taille de particules appelé MASTERSIZER 2000, commercialisé par la société MALVERN, et d'autre part d'un conductimètre CYBERSCAN CON 11 de EUTECH INSTRUMENTS avec une cellule de mesure de référence ECCONSEN91W/35608-50 dont la constante de cellule est de K=1.0.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Vernis pour recouvrir la surface d'un substrat et déposé par jet d'encre dont la composition du vernis comprend au moins :
i. un monomère durcissable acrylate monofonctionnel,
ii. un monomère durcissable diacrylate difonctionnel,
iii. un monomère durcissable acrylate de seule fonctionnalité acrylate et dont la dite fonctionnalité est comprise entre 3 et 6,
iv. un photo-initiateur,
v. une dispersion de nanoparticule optionnelle, et
vi. une résine auto-amorçante optionnelle,
**caractérisé en ce que**
• le vernis comprend au moins 5 % en poids de monomère durcissable acrylate monofonctionnel comprenant au moins deux éthoxylations et/ou propoxylations,
• le vernis comprend au moins 20 % en poids de monomère durcissable diacrylate difonctionnel,
• le vernis comprend au moins 5 % en poids de monomère durcissable acrylate de seule fonctionnalité acrylate et dont la dite fonctionnalité est comprise entre 3 et 6, le dit monomère comprenant au moins deux éthoxylations et/ou propoxylations,
• le photo-initiateur comprend au moins 50% en poids de photo-initiateur ayant une masse molaire supérieure à 400 g/mol,
• les monomères acrylates et les photo-initiateurs représentent au moins 45 % en poids du vernis,
• le vernis présente une viscosité inférieure à 200 mPa.s à 25°C et une tension de surface comprise entre 10 mN/m et 50 mN/m à 25°C, et
• le monomère durcissable diacrylate difonctionnel consiste en un mélange de diacrylates comprenant au moins deux éthoxylations et/ou propoxylations avec des diacrylates qui ne comprennent pas au moins deux éthoxylations et/ou propoxylations.

2. Vernis selon la revendication précédente **caractérisé en ce que** le rapport en poids entre les diacrylates comprenant au moins deux éthoxylations et/ou propoxylations avec les diacrylates qui ne comprennent pas au moins deux éthoxylations et/ou propoxylations est compris entre 1 : 10 et 10 : 1, par exemple 1 : 3 et 3 : 1.

3. Vernis selon la revendication précédente **caractérisé en ce qu'**il comprend au moins 7,5 % en poids de monomère durcissable acrylate monofonctionnel comprenant au moins deux éthoxylations et/ou propoxylations.

4. Vernis selon l'une quelconque des revendications précédentes **caractérisé en ce que** la concentration dans le vernis en monomère durcissable acrylate monofonctionnel ne comprenant pas au moins deux éthoxylations et/ou propoxylations est inférieure à 10 % en poids, par exemple inférieure à 1 % en poids.

5. Vernis selon l'une quelconque des revendications précédentes **caractérisé en ce qu'**il comprend au moins 25 % en poids de monomère durcissable diacrylate difonctionnel, par exemple au moins 30 % en poids.

6. Vernis selon l'une quelconque des revendications précédentes **caractérisé en ce qu'**il comprend au moins 7,5 % en poids de monomères durcissables acrylates de seule fonctionnalité acrylate et dont la dite fonctionnalité est comprise entre 3 et 6 comprenant au moins deux éthoxylations et/ou propoxylations.

7. Vernis selon l'une quelconque des revendications précédentes **caractérisé en ce que** la concentration dans le vernis en monomères durcissables acrylates de seule fonctionnalité acrylate et dont la dite fonctionnalité est comprise entre 3 et 6 ne comprenant pas au moins deux éthoxylations et/ou propoxylations est inférieure à 10 % en poids, par exemple inférieure à 1 % en poids.

8. Vernis selon l'une quelconque des revendications précédentes **caractérisé en ce qu'**il comprend un antioxydant.

9. Vernis selon l'une quelconque des revendications précédentes **caractérisé en ce qu'**il comprend un agent tensio-actif.

10. Vernis selon l'une quelconque des revendications précédentes **caractérisé en ce qu'**il comprend une résine choisie parmi les résines acryliques, vinyliques, cétoniques, polyesters, aldéhydes, époxy, uréthane, et/ou polyéther.

11. Vernis selon l'une quelconque des revendications précédentes **caractérisé en ce qu'**il est transparent et/ou qu'il ne contient aucun colorant.

12. Vernis selon l'une quelconque des revendications précédentes **caractérisé par** une viscosité inférieure à 200 mPa.s à 25°C, par exemple entre 8 et 60 mPa.s, et/ou une tension de surface comprise entre 10 mN/m et 50 mN/m à 25°C, par exemple entre 20 et 25 mN/m.

13. Vernis selon l'une quelconque des revendications précédentes **caractérisé en ce qu'**il comprend :
• un monomère durcissable acrylate monofonctionnel,
• un monomère durcissable diacrylate difonctionnel,
• un monomère durcissable acrylate de seule fonctionnalité acrylate et dont la dite fonctionnalité est comprise entre 3 et 6,
• un photo-initiateur, et optionnellement
un agent tensio-actif et/ou un antioxydant,
et dont la somme de ces composants représente au moins 85% en poids, par exemple au moins 95% en poids du vernis.

14. Utilisation du vernis de l'une quelconque des revendications 1 à 13 en tant que vernis à faible migration (et/ou encre à faible migration) pour le revêtement de matériaux d'emballage de produits cosmétiques et/ou de denrées alimentaires.

15. Utilisation du vernis selon la revendication 14 dans une technologie d'impression par jet d'encre comprenant une étape de séchage et/ou de polymérisation du dit vernis et/ou de la dite encre, **caractérisé en ce que** la température à laquelle le vernis est soumis lors de son passage dans les têtes d'impression est comprise entre 25 et 80 °C, de préférence entre 35°C et 50°C, et/ou **en ce que** le séchage et/ou polymérisation du dit vernis et/ou encre est réalisé dans des plages de vitesse de déplacement du substrat allant de 0,05 à 10 m/s, par exemple de 0,05 à 2 m/s.

16. Utilisation du vernis selon l'une quelconque des revendications 14 ou 15 dans une technologie d'impression par jet d'encre **caractérisé en ce que** la technologie comprend une étape de séchage et/ou de polymérisation du dit vernis et **en ce que** cette étape comprend une exposition du vernis à un rayonnement ultraviolet, par exemple à un rayonnement UV par lampe UV conventionnelle, ou à un rayonnement UV par diode électroluminescente (LED), de préférence à un rayonnement UV par combinaison d'une diode électroluminescente (LED) et d'une lampe UV conventionnelle.

17. Utilisation du vernis selon l'une quelconque des revendications 14 à 16 pour le revêtement de matériaux d'emballage de produits par la technologie jet d'encre avec des épaisseurs de dépôts supérieures à 3 microns, 5 microns, 10 microns, 50 microns et/ou 100 microns voir même des épaisseurs pouvant atteindre les 300 microns tout en conservant ses propriétés de faible migration.

## Patentansprüche

1. Lack zum Bedecken der Oberfläche eines Substrats, der durch Tintenstrahltechnik abgeschieden wird, wobei die Zusammensetzung des Lacks wenigstens Folgendes umfasst:
i. ein härtbares monofunktionelles Acrylatmonomer;
ii. ein härtbares difunktionelles Diacrylatmonomer;
iii. ein härtbares Acrylatmonomer mit alleiniger Acrylatfunktionalität, wobei diese Funktionalität 3 bis 6 beträgt;
iv. einen Photoinitiator;
v. gegebenenfalls eine Nanopartikeldispersion; und
vi. gegebenenfalls ein selbsthärtendes Harz;
**dadurch gekennzeichnet, dass**
• der Lack wenigstens 5 Gew.-% härtbares monofunktionelles Acrylatmonomer, das wenigstens zwei Ethoxylierungen und/oder Propoxylierungen umfasst, umfasst;
• der Lack wenigstens 20 Gew.-% härtbares difunktionelles Diacrylatmonomer umfasst;
• der Lack wenigstens 5 Gew.-% härtbares Acrylatmonomer mit alleiniger Acrylatfunktionalität, wobei diese Funktionalität 3 bis 6 beträgt, umfasst, wobei dieses Monomer wenigstens zwei Ethoxylierungen und/oder Propoxylierungen umfasst;
• der Photoinitiator wenigstens 5 Gew.-% Photoinitiator mit einer Molmasse von über 400 g/mol umfasst;
• die Acrylatmonomere und die Photoinitiatoren wenigstens 45 Gew.-% des Lacks ausmachen;
• der Lack eine Viskosität von weniger als 200 mPa·s bei 25 °C und eine Oberflächenspannung von 10 mN/m bis 50 mN/m bei 25 °C aufweist; und
• das härtbare difunktionelle Diacrylatmonomer aus einem Gemisch von Diacrylaten, die wenigstens zwei Ethoxylierungen und/oder Propoxylierungen umfassen, mit Diacrylaten, die nicht wenigstens zwei Ethoxylierungen und/oder Propoxylierungen umfassen, besteht.

2. Lack gemäß dem vorstehenden Anspruch, **dadurch gekennzeichnet, dass** das Gewichtsverhältnis der Diacrylate, die wenigstens zwei Ethoxylierungen und/oder Propoxylierungen umfassen, zu den Diacrylaten, die nicht wenigstens zwei Ethoxylierungen und/oder Propoxylierungen umfassen, 1:10 bis 10:1, zum Beispiel 1:3 und 3:1, beträgt.

3. Lack gemäß dem vorstehenden Anspruch, **dadurch gekennzeichnet, dass** er wenigstens 7,5 Gew.-% härtbares monofunktionelles Acrylatmonomer, das wenigstens zwei Ethoxylierungen und/oder Propoxylierungen umfasst, umfasst.

4. Lack gemäß einem der vorstehenden Ansprüche, **dadurch gekennzeichnet, dass** die Konzentration des härtbaren monofunktionellen Acrylatmonomers, das nicht wenigstens zwei Ethoxylierungen und/oder Propoxylierungen umfasst, in dem Lack kleiner als 10 Gew.-%, zum Beispiel kleiner als 1 Gew.-%, ist.

5. Lack gemäß einem der vorstehenden Ansprüche, **dadurch gekennzeichnet, dass** er wenigstens 25 Gew.-% härtbares difunktionelles Diacrylatmonomer, zum Beispiel wenigstens 30 Gew.-%, umfasst.

6. Lack gemäß einem der vorstehenden Ansprüche, **dadurch gekennzeichnet, dass** er wenigstens 7,5 Gew.-% härtbare Acrylatmonomere mit alleiniger Acrylatfunktionalität, wobei diese Funktionalität 3 bis 6 beträgt, die wenigstens zwei Ethoxylierungen und/oder Propoxylierungen umfassen, umfasst.

7. Lack gemäß einem der vorstehenden Ansprüche, **dadurch gekennzeichnet, dass** die Konzentration der härtbaren Acrylatmonomere mit alleiniger Acrylatfunktionalität, wobei diese Funktionalität 3 bis 6 beträgt, die wenigstens zwei Ethoxylierungen und/oder Propoxylierungen umfassen, in dem Lack kleiner als 10 Gew.-%, zum Beispiel kleiner als 1 Gew.-%, ist.

8. Lack gemäß einem der vorstehenden Ansprüche, **dadurch gekennzeichnet, dass** er ein Antioxidans umfasst.

9. Lack gemäß einem der vorstehenden Ansprüche, **dadurch gekennzeichnet, dass** er ein Tensid umfasst.

10. Lack gemäß einem der vorstehenden Ansprüche, **dadurch gekennzeichnet, dass** er ein Harz umfasst, das aus Acryl., Vinyl-, Keton-, Polyester-, Aldehyd-, Epoxid-, Urethan- und/oder Polyetherharzen ausgewählt ist.

11. Lack gemäß einem der vorstehenden Ansprüche, **dadurch gekennzeichnet, dass** er transparent ist und/oder keinen Farbstoff enthält.

12. Lack gemäß einem der vorstehenden Ansprüche, **gekennzeichnet durch** eine Viskosität von weniger als 200 mPa·s bei 25 °C, zum Beispiel 8 bis 60 mPa·s, und/oder eine Oberflächenspannung von 10 mN/m bis 50 mN/m bei 25 °C, zum Beispiel 20 bis 25 mN/m.

13. Lack gemäß einem der vorstehenden Ansprüche, **dadurch gekennzeichnet, dass** er Folgendes umfasst:
• ein härtbares monofunktionelles Acrylatmonomer;
• ein härtbares difunktionelles Diacrylatmonomer;
• ein härtbares Acrylatmonomer mit alleiniger Acrylatfunktionalität, wobei diese Funktionalität 3 bis 6 beträgt;
• einen Photoinitiator; und gegebenenfalls
• ein Tensid und/oder ein Antioxidans;
wobei die Summe dieser Bestandteile wenigstens 85 Gew.-%, zum Beispiel wenigstens 95 Gew.-%, des Lacks ausmacht.

14. Verwendung des Lacks gemäß einem der Ansprüche 1 bis 13 als Lack mit geringer Migration (und/oder Tinte mit geringer Migration) zur Auskleidung von Verpackungsmaterialien von kosmetischen Produkten und/oder Lebensmitteln.

15. Verwendung des Lacks gemäß Anspruch 14 in einer Tintenstrahldrucktechnik, die einen Schritt des Trocknens und/oder der Polymerisation des Lacks und/oder der Tinte umfasst, **dadurch gekennzeichnet, dass** die Temperatur, der der Lack bei seiner Passage in den Druckköpfen ausgesetzt ist, 25 bis 80 °C, vorzugsweise 35 °C bis 50 °C, beträgt und/oder dass das Trocknen und/oder die Polymerisation des Lacks und/oder der Tinte in Bereichen der Geschwindigkeit der Substratverschiebung von 0,05 bis 10 m/s, zum Beispiel 0,05 bis 2 m/s, erfolgt.

16. Verwendung des Lacks gemäß einem der Ansprüche 14 oder 15 in einer Tintenstrahldrucktechnik, **dadurch gekennzeichnet, dass** die Technik einen Schritt des Trocknens und/oder der Polymerisation des Lacks umfasst und dass dieser Schritt eine Einwirkung von ultravioletter Strahlung auf den Lack umfasst, zum Beispiel UV-Strahlung einer herkömmlichen UV-Lampe oder UV-Strahlung einer Leuchtdiode (LED), vorzugsweise UV-Strahlung durch eine Kombination einer Leuchtdiode (LED) und einer herkömmlichen UV-Lampe.

17. Verwendung des Lacks gemäß einem der Ansprüche 14 bis 16 zur Auskleidung von Verpackungsmaterialien von Produkten durch Tintenstrahltechnik mit Abscheidungsdicken von über 3 µm, 5 µm, 10 µm, 50 µm und/oder 100 µm, wobei die Dicken sogar 300 µm erreichen können und dabei die geringen Migrationseigenschaften des Lacks beibehalten.

## Claims

1. Varnish for coating the surface of a substrate and inkjet-deposited, where the varnish composition includes at least:
i. a curable acrylate monofunctional monomer,
ii. a curable diacrylate bifunctional monomer,
iii. a curable acrylate monomer with only an acrylate functionality, with said functionality comprised between 3 and 6,
iv. a photo-initiator,
v. an optional dispersion of nanoparticles, and
vi. an optional self-initiating resin,
**characterised in that**
• the varnish contains at least 5% by weight of curable acrylate monofunctional monomer including at least two ethoxylations and/or propoxylations,
• the varnish contains at least 20% by weight of curable bifunctional diacrylate monomer,
• the varnish contains at least 5% by weight of curable acrylate monomer with only the acrylate functionality, said functionality being comprised between 3 and 6, said monomer including at least two ethoxylations and/or propoxylations,
• the photo-initiator contains 50% by weight of a photo-initiator with a molar mass of more than 400 g/mol,
• acrylate monomers and photo-initiators represent at least 45% by weight of varnish,
• the varnish has a viscosity of less than 200 mPa.s at 25°C and a surface tension comprised between 10 mN/m and 50 mN/m at 25°C, and
• the curable bifunctional diacrylate monomer consists in a mixture of diacrylates containing at least two ethoxylations and/or propoxylations with diacrylates which do not contain at least two ethoxylations and/or propoxylations.

2. Varnish according to the previous claim **characterised in that** the ratio by weight between the diacrylates containing at least two ethoxylations and/or propoxylations and the diacrylates which do not contain at least two ethoxylations and/or propoxylations is comprised between 1: 10 and 10: 1, e.g. 1: 3 and 3: 1.

3. Varnish according to the previous claim, **characterised in that** same contains at least 7.5% by weight of curable acrylate monofunctional monomer including at least two ethoxylations and/or propoxylations.

4. Varnish according to any of the previous claims, **characterized in that** the concentration, in the varnish, of the curable acrylate monofunctional monomer which does not contain two ethoxylations and/or propoxylations is less than 10% by weight, e.g. less than 1% by weight.

5. Varnish according to any of the previous claims **characterised in that** same contains at least 25% by weight of curable diacrylate bifunctional monomer, e.g. at least 30% by weight.

6. Varnish according to any of the previous claims **characterised in that** same contains at least 7.5% by weight of curable acrylate monomers with only an acrylate functionality, where said functionality is comprised between 3 and 6 containing at least two ethoxylations and/or propoxylations.

7. Varnish according to any of the previous claims **characterised in that** the concentration, in the varnish, of curable acrylate monomers with only an acrylate functionality, where said functionality is comprised between 3 and 6 not containing at least two ethoxylations and propoxylations is less than 10% by weight, e.g. less than 1% by weight.

8. Varnish according to any of the previous claims **characterised in that** same contains an antioxidant.

9. Varnish according to any of the previous claims **characterised in that** same contains a surfactant.

10. Varnish according to any of the previous claims **characterised in that** same contains a resin chosen from acrylic resins, vinyl resins, ketonic resins, polyesters, aldehydes, epoxy, urethane, and/or polyether.

11. Varnish according to any of the previous claims **characterised in that** same is transparent and/or **in that** same does not contain any dye.

12. Varnish according to any of the previous claims **characterised by** a viscosity of less than 200 mPa.s at 25°C, e.g. between 8 and 60 mPa.s, and/or a surface tension comprised between 10 mN/m and 50 mN/m at 25°C, e.g. between 20 and 25 mN/m.

13. Varnish according to any of the previous claims **characterised in that** same contains:
• a curable acrylate monofunctional monomer,
• a curable diacrylate bifunctional monomer,
• a curable acrylate monomer with only an acrylate functionality, where said functionality is comprised between 3 and 6,
• a photo-initiator, and optionally
a surfactant and/or an antioxidant,
and where the sum of these components represents at least 85% by weight, e.g. at least 95% by weight of the varnish.

14. Use of the varnish of any of the claims 1 to 13 as low-migration varnish (and/or low-migration ink) for coating packaging materials for cosmetics and/or food.

15. Use of the varnish according to claim 14 in an inkjet printing technology including a drying and/or polymerisation step for said varnish, **characterised in that** the temperature at which the varnish is exposed when flowing through the printing heads is comprised between 25 and 80°C, preferably between 35°C and 50°C, and/or **in that** the drying and/or polymerisation of said varnish and/or ink is carried out within ranges of substrate movement from 0.05 to 10 m/s, e.g. from 0.05 to 2 m/s.

16. Use of a varnish according to any of the claims 14 or 15 in an inkjet printing technology **characterised in that** the technology includes a drying and/or polymerisation step for said varnish, and **in that** this step includes the exposure of the varnish to an ultraviolet radiation, e.g. to UV radiation from a conventional UV lamp, or to UV radiation from a light-emitting diode (LED), preferably to UV radiation from a combination of a light-emitting diode (LED) and a conventional UV lamp.

17. Use of a varnish according to any of the claims 14 to 16 for the coating of packaging materials for products, using inkjet technology, with deposition thicknesses of more than 3 microns, 5 microns, 10 microns, 50 microns and/or 100 microns, and even thicknesses that can reach 300 microns while preserving the low-migration properties thereof.
